Europäisches Patentamt

European Patent Office

Office européen des brevets

(19)

(11) Publication number: 0 284 221
A1

(12) EUROPEAN PATENT APPLICATION

(21) Application number: 88301781.6

(22) Date of filing: 01.03.88

(51) Int. Cl.4: B60T 11/16

(30) Priority: 03.03.87 GB 8704901
09.05.87 GB 8711035

(43) Date of publication of application:
28.09.88 Bulletin 88/39 .

(84) Designated Contracting States:
DE FR GB IT

(71) Applicant: LUCAS INDUSTRIES public limited
company
Great King Street
Birmingham, B19 2XF West Midlands(GB)

(72) Inventor: Campbell, Roy
The Corner House 1, Marlbrook Lane
Lickey Rock Bromsgrove
Worcestershire(GB)
Inventor: Price, Anthony George
14, Meadow Lane Croesyceiliog
Cwmbran, Gwent, NP44 2EY Wales(GB)

(74) Representative: Waite, Anthony William et al
MARKS & CLERK Alpha Tower Suffolk Street
Queensway
Birmingham B1 1TT(GB)

(54) Master cylinder.

(57) A master cylinder has a pressure cylinder (1)
and a separately made reservoir element (22) envel-
oping, in spaced relationship substantially the entire
outer axially and radially extending surface of the
cylinder defining the internal bore thereof. The re-
sulting space (23) constitutes a reservoir for contain-
ing hydraulic fluid. The cylinder outer surface re-
quires no finishing to improve its appearance and is
protected against corrosion by the contacting fluid.

FIG 1

## MASTER CYLINDER.

This invention relates to a master cylinder, primarily for use in a vehicle hydraulic clutch or braking system, and of the general kind having a pressure cylinder and a fluid reservoir communicating with the interior of the cylinder via a recuperation port.

In some conventional master cylinders of the aforesaid general kind, the pressure cylinder is of metal and the reservoir a separately made component of plastics material mounted on the cylinder by way of one or more projecting hollow spigots of the reservoir engaged and sealed within hollow projecting bosses of the cylinder. The provision of such bosses, either integrally in cast cylinders, or by welding on separate components in fabricated cylinders, is a relatively expensive procedure in terms of material required and/or manufacturing techniques.

An object of the invention is to provide a master cylinder of the aforesaid general kind of generally simplified construction and capable of being manufactured less expensively than some conventional master cylinders.

According to the present invention, a master cylinder comprises a pressure cylinder having an internal axial bore, a separately made reservoir element enveloping, in spaced relationship, the axially and radially extending outer surface of at least a closed end portion of the cylinder defining the internal bore, such as to form a reservoir between the internal surface of said element and said cylinder surface, and a seal element surrounding an outer peripheral surface portion of the cylinder.

In one convenient arrangement, an outlet port connection of the cylinder extends through the reservoir element to permit connection of the master cylinder into an hydraulic braking circuit.

The outlet port connection may extend other than axially, and preferably radially, and acts to restrain the reservoir and cylinder against relative axial movement.

Preferably, the reservoir element is mounted on the outer cylindrical surface of the cylinder by way of an annular seal which sealingly engages said cylinder external surface and an opposed internal surrounding surface of the reservoir element.

The reservoir element may conveniently have an internal formation arranged to snap-engage over a complementary formation of the cylinder in order to provide axial retention for the reservoir element.

The invention will now be described, by way of example, with reference to the accompanying drawings in which:-

Figure 1 is a longitudinal cross-section of one form of the master cylinder of the invention;

Figure 2 is an end view from the left of the master cylinder of Figure 1;

Figure 3 is a side view, partly in longitudinal cross-section of an alternative embodiment of the master cylinder of the invention;

Figure 4 is a plan view of the master cylinder of Figure 3;

Figure 5 is a view similar to Figure 3 of another embodiment of the master cylinder of the invention, and

Figure 6 is an end view, partly in cross-section of the master cylinder of Figure 5.

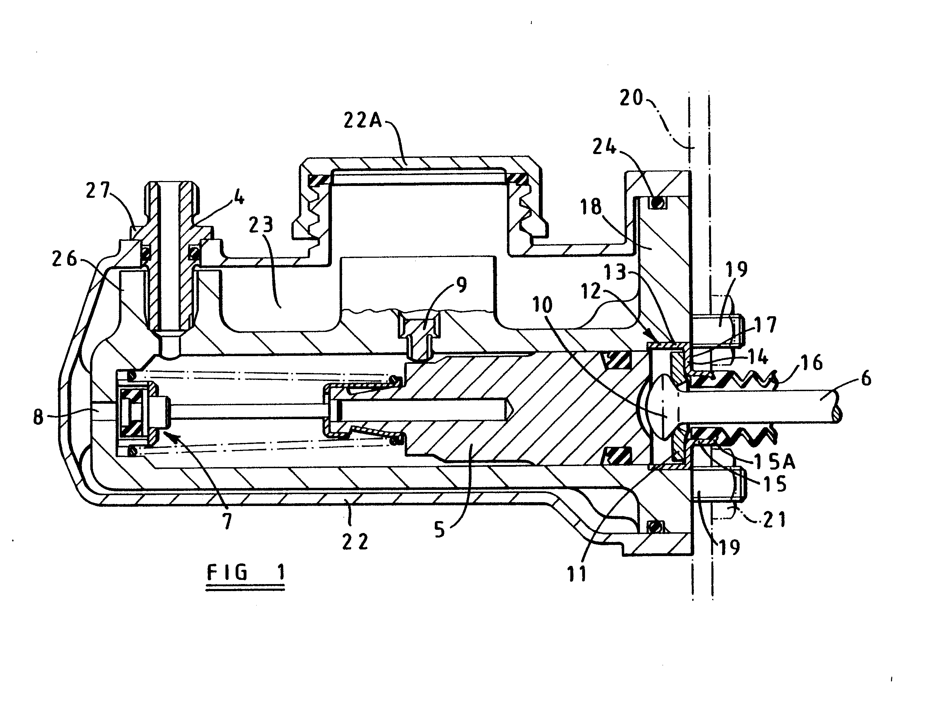

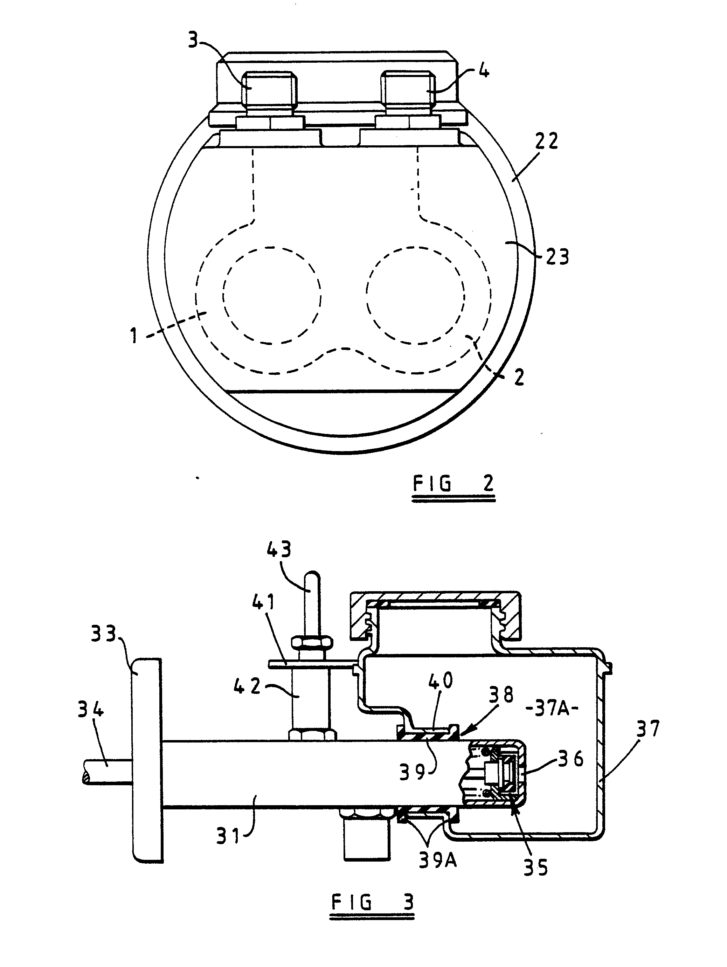

Referring to Figures 1 and 2, the master cylinder illustrated therein is a dual master cylinder having a pair of cylinders 1, 2 arranged in parallel relationship and having respective outlets 3, 4, for connection to two separate braking circuits which would normally act respectively on the rear wheels of a tractor, for example. The cylinders may be actuated simultaneously for normal retardation of the vehicle, or separately to assist in the steering of the vehicle, in conventional manner.

Both of the master cylinders are indentical internally and the cylinder 2 is illustrated in more detail in Figure 1. The master cylinder contains a piston 5 actuated by a force input rod 6, the piston carrying a centre valve assembly 7 which is operated in conventional manner to control the flow of fluid through a recuperation port 8. A compensation passage (not shown) is provided between the two master cylinders (1, 2) and a compensation valve is provided in each cylinder at the adjacent end of the compensation passage, one such valve being illustrated at 9 and being actuated by movement of the piston 5 in a manner which will be familiar to those versed in the art.

The force input rod 6 is provided with an enlarged head 10 which engages a retaining member 11 which is itself held in place by a retaining device in the form of a cup 12 which has a cylindrical portion 13 press-fitted into the open end of the cylinder and a generally radial portion 14 which lies behind and retains the member 11. A further smaller diameter cylindrical part 15 of the retainer 12 is secured to a convoluted boot 16 surrounding the rod 6 to prevent the ingress of foreign material along the rod 6. The boot may be moulded onto the cylindrical part 15 of the retainer 12 so as to form a permanent assembly therewith. A portion 15A of the retainer is bent radially inwardly to lock the boot axially relative to the device 12. The outwardly facing radial surface 17 of the device 12 is arranged to be flush with the outer surface of a support flange 18 of the cylinder, which latter is provided with axially projecting threaded spigots 19. The cylinder is mounted in position on a fixed support, such as the bulkhead 20 of a vehicle, and secured by engagement of nuts 21 on the spigots 19. The surface 17 of the retainer 12 is then engaged against the fixed bulkhead 20 and any push rod return loads exerted on the rod by internal piston return springs and external pedal return springs are reacted via the retainer 11 onto the fixed bulkhead. This arrangement is convenient in that it enables the strength of the existing bulkhead to be used in order to react, via the relatively flimsy retainer 12, substantial forces arising as aforesaid on the force input rod.

A hollow reservoir member 22 is mounted on the pressure cylinders 1, 2 and is shaped and dimensioned so as to surround, in spaced relationship, the entire axially and radially extending external surfaces of the cylinders, the space 23 thus formed between the reservoir and cylinder outer surface constituting the reservoir proper which, in use, contains hydraulic fluid. The right hand end of the reservoir element, as viewed in the drawings, is enlarged to embrace the master cylinder flange 18 and a seal 24 is interposed between the facing surfaces. A cap 22A normally closes a filler orifice of the reservoir element.

As seen from Figure 1, each radially extending outlet port connection 3, 4 passes through an opening in the reservoir element 22 to be screwed into an internally threaded bore within a boss 26 of the cylinder. A flange 27 of the port connection lies against an outer surface of the reservoir element to clamp the latter in position against the cylinder and the port connection thus retains the reservoir element in position both radially and axially relative to the cylinder.

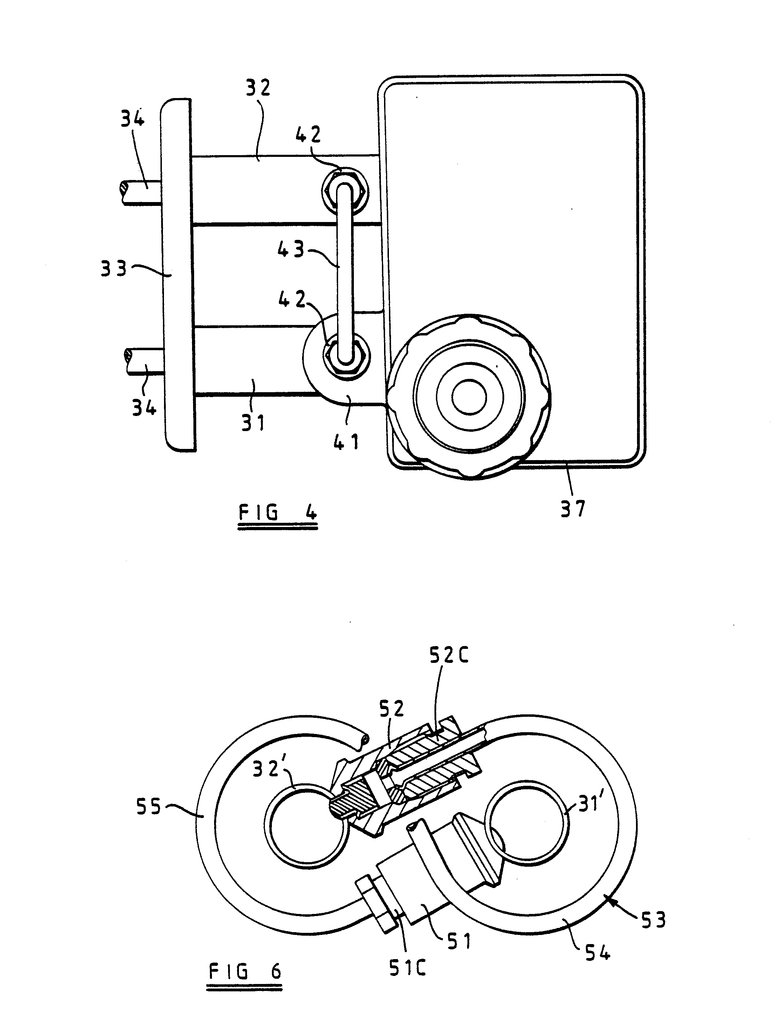

In the alternative embodiment illustrated in Figures 3 and 4, a reservoir element 37 surrounds respective end portions of the cylinder outer surfaces and is spaced therefrom to form a reservoir chamber 37A. The reservoir element is mounted on the cylinders by respective resilient annular mounting devices, as of rubber or rubber-like material for example, one of which is illustrated at 38. Each device 38 has a cylindrical portion 39 dimensioned to fit in fluid-tight manner around the outer surface of one of the cylinders and a pair of spaced terminal radial flanges 39A between which fits a short cylindrical portion 40 of the reservoir extending parallel with the cylinder. The portion 40 forms a fluid-tight seal against the portion 39 of the mounting device and this, in conjunction with the sealing action of the portion 39 around the cylinder, prevents fluid from the internal reservoir chamber 37A from leaking to the exterior around the cylinder. The devices 38 can thus be seen to be advantageous in performing both mounting and sealing functions in a simple, convenient and cost-effective manner and also facilitating assembly of the reservoir element onto the cylinders.

The reservoir element 37 is restrained axially relative to the cylinder by a lug 41 projecting axially from the element 37 and closely surrounding one of an adjacent pair of port connectors 42 serving for the connection to the cylinders of a pipe 43 forming a transfer passage in conventional manner. An additional similar lug may be provided for co-action with the other connector 42 if required. Additional axial restraint could be obtained by extending the reservoir element to lie over a part of the rear surface of the flange 18 so as, in use, to be trapped between this flange and the fixed support 20. If desired, fixing means such as the studs 19 could pass through the trapped reservoir portion for additional security.

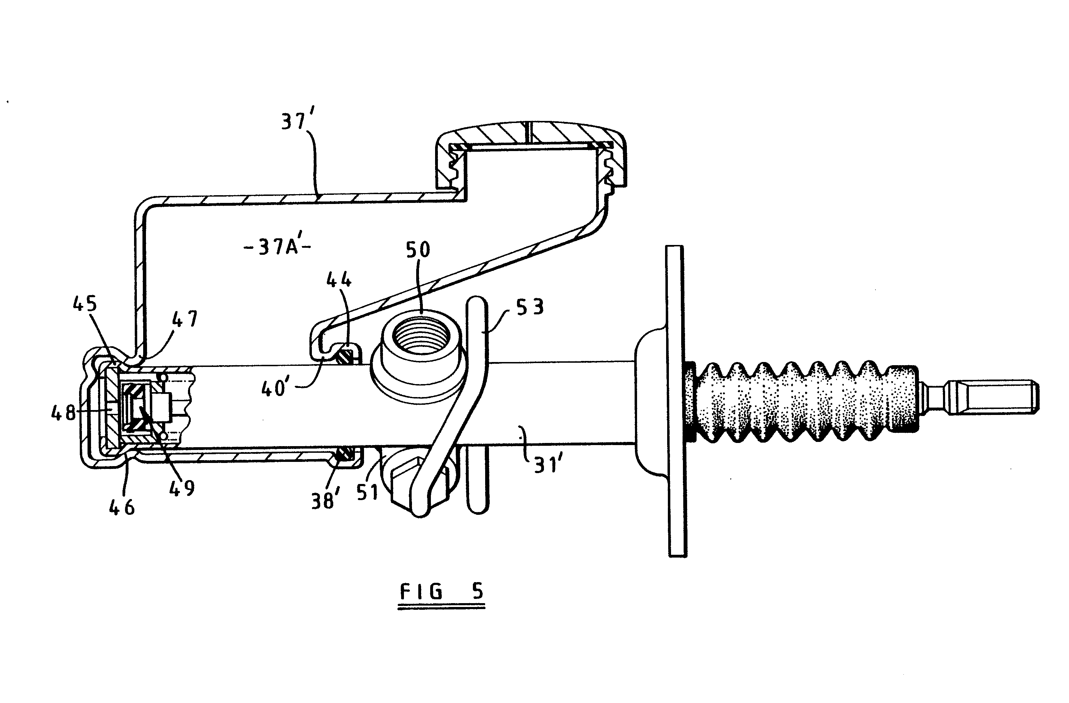

The alternative illustrated in Figures 5 and 6 again has a reservoir element 37 mounted around end portions of a pair of pressure cylinders 31', 32' in spaced relationship to form a reservoir chamber 37A'. Each cylinder has an outlet port 50, one of which can be seen in Figure 5, lying outside the reservoir element. The reservoir element is again mounted on the respective cylinders by means of respective annular mounting devices 38', of which one can be seen in Figure 5. In this embodiment the reservoir element has generally cylindrical portions 40' equivalent to the portions 40 of Figure 3 but stepped to form recesses 44 which house the mounting devices 38'. The latter act, as previously, to mount the reservoir element relative to the cylinders and also to seal between the element and cylinders to prevent fluid leakage from the chamber 37A'. The free end portion 45 of each cylinder has a slightly increased diameter to form a shoulder 46 behind which an internal rib 47 of the reservoir element is snap-engaged to retain the reservoir element in position on the cylinder. Fluid contained within the reservoir chamber 37A' is fed to the cylinder via a recuperation port, flow through which is controlled by a centre valve 49 actuated by a piston (not shown) within the cylinder, in conventional manner.

The cylinders 31', 32' are provided respectively with external transfer port connections 51, 52, to permit the connection to the cylinders of a pipe 53 forming a fluid transfer passage between the cylinders. The connectors 51, 52, extend in opposite directions from the respective cylinders and lie in generally parallel relationship with the connector 52 extending upwardly and the connector 51 downwardly. The pipe 53, as viewed in Figure 6, takes the general form of a figure 8, of which the two loops 54, 55, surround the respective cylinders 31' and 32' in a generally concentric manner, the respective ends of the pipe 53 being connected to the transfer passage port connectors 51, 52 by conventional pipe nuts 51C, 52C or any other convenient means. As will be seen more clearly from Figures 5, the two loops 54, 55 of the pipe 53, in this embodiment lie in different planes. This is because of the particular relative dispositions in this embodiment of the outlet ports 50 and transfer port connectors 51, 52, it being necessary to displace the transfer pipe longitudinally of the cylinders to enable the pipe to pass with clearance alongside the outlet ports 52 The transfer passage arrangement illustrated is very compact and, in particular, enables the height of the master cylinder assembly, which is very often a crucial factor in installing the assembly in a vehicle, to be reduced, as compared with some conventional arrangements.

The invention has been described in relation to an assembly employing fabricated master cylinders. It would, however, be possible to apply the invention to a pair of cast cylinders. Although it is preferred in the embodiment of Figures 5 and 6 to arrange the port connectors 51, 52 in overlapping parallel relationship, because this provides the greatest gain in compactness, it is possible to obtain some advantage with a reduced degree of overlap and with an orientation other than parallel.

## Claims

1. A master cylinder comprising a pressure cylinder (1) having an internal axial bore, and a separately made reservoir element (22) thereon, characterised in that the reservoir element (22) envelopes, in spaced relationship, the axially and radially extending outer surface of at least a closed end portion of the cylinder defining the internal bore, such as to form a reservoir (23) between the internal surface of said element and said cylinder surface, and a seal element (24) surrounding an outer peripheral surface portion of the cylinder (1) and engaged by the reservoir element (23).

2. A master cylinder according to Claim 1 characterised in that said reservoir element (22) envelopes the entire outer axially and radially extending bore-defining outer surface of the cylinder (1).

3. A master cylinder according to Claim 2 characterised in that the seal is provided between oppositely facing surfaces of the reservoir element (22) and cylinder (1) at a location adjacent an open end of the cylinder.

4. A master cylinder according to any one of the preceding claims characterised in that the reservoir element (22) is supported against the closed end of the cylinder.

5. A master cylinder according to any one of the preceding claims characterised in that the reservoir element (22) envelopes only a closed end portion of the cylinder and is supported on the outer cylindrical surface of the cylinder by way of an annular seal (39) which sealingly engages said cylinder external surface and an opposed internal surrounding surface of the reservoir element.

6. A master cylinder according to any one of the preceding claims characterised in that the reservoir element (22) is restrained axially of the cylinder (1) by a port connector (27) of the cylinder.

7. A master cylinder according to Claim 6 characterised in that a part of the reservoir element (22) closely surrounds the port connector (27) in order to restrain said element axially of the cylinder (1).

8. A master cylinder according to Claim 5 characterised in that the reservoir element (37) is provided with a projecting lug (41) which co-operates with a port connector (42) of the cylinder (31) to restrain the element axially of the cylinder.

9. A master cylinder according to Claim 5 characterised in that the reservoir element (37') has an internal formation (47) arranged to snap-engage over a complementary formation (45) of the cylinder (31') in order to provide axial retention for the reservoir element (37').

10. A master cylinder according to Claim 5 characterised in that the annular seal (38) has a cylindrical portion (39) sealingly engaged around the outer cylinder surface and a pair of axially spaced radial flanges (39A) between which is located a portion (40) of the reservoir element surrounding the seal cylindrical portion (39).

11. A master cylinder according to any one of the preceding claims in the form of a dual master cylinder comprising a pair of parallel cylinders (1, 2), characterised in that the reservoir element (22) envelopes at least a closed end portion of each cylinder (1, 2).

12. A master cylinder according to Claim 11 wherein the cylinders (1, 2) are interconnected by a pipe (53) serving as a fluid transfer passage, said pipe forming a pair of loops (54, 55) extending respectively around the cylinders (31', 32') in opposite directions.

13. A master cylinder according to Claim 12 characterised in that the pipe (53) is connected to respective port connections (51, 52) of the cylinders (31', 32'), said connections (51, 52) overlapping each other in a direction transverse to the longitudinal directions of the cylinders (31', 32').

14. A master cylinder according to Claim 13 characterised in that said connections (51, 52) extend in mutual parallel relationship.

FIG 1

FIG 2

FIG 3

FIG 4

FIG 6

37'

−37A'−

50

44

45

47

53

40'

48

49

46

38'

51

31'

FIG 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-1 481 612 (AUTOMOTIVE PRODUCTS) * page 3, lines 62-71; figure 1 * | 1 | B 60 T 11/16 |
| A | | 2,3 | |
| Y | GB-A-1 226 166 (GIRLING) * page 1, lines 34-49; figure 2 * | 1 | |
| A | | 2 | |
| A | DE-B-1 177 955 (GIEBLER) * figures 1-4 * | 2 | |
| A | GB-A-2 076 095 (AISIN SEIKI) * figure * | 1,4 | |
| A | DE-A-2 941 198 (TEVES) | 1,4 | |

TECHNICAL FIELDS SEARCHED (Int. Cl.4)

B 60 T 11/00

The present search report has been drawn up for all claims

| Place of search | Date of completion of the search | Examiner |
|---|---|---|
| BERLIN | 20-06-1988 | LUDWIG H J |